# EUROPÄISCHE PATENTSCHRIFT

(11) **EP 2 286 927 B1**
(45) Veröffentlichungstag und Bekanntmachung des Hinweises auf die Patenterteilung: **24.10.2012**
(21) Anmeldenummer: 09010637.8
(22) Anmeldetag: 19.08.2009
(51) Int. Cl.: B05B 13/04, B05B 13/02, B25J 9/00, B25J 5/02, B25J 9/02, B05B 15/12

(54) **Roboteranlage**
Robot assembly
Installation de robot

(43) Veröffentlichungstag der Anmeldung: 23.02.2011
(73) Patentinhaber: ABB AG, 68309 Mannheim (DE)
(72) Erfinder: Vandepitte, Frederik, 35447 Reiskirchen (DE)

(56) Entgegenhaltungen:
- WO-A1-2009/146936
- GB-A- 2 180 173

## Beschreibung

Die Erfindung betrifft eine Roboteranlage zur Lackierung von Werkstücken, mit wenigstens einer Bearbeitungszone, welche von einer Fördervorrichtung für die Werkstücke entlang eines Förderweges durchquert ist und welche wenigstens zwei beiderseits der Fördervorrichtung angeordnete Lackierroboter mit einer zugehörigen Roboterbasis und wenigstens einen Handhabungsroboter mit einer zugehörigen Roboterbasis aufweist.

Es ist allgemein bekannt, dass bei der Lackierung von Automobilkarosserien neben deren äußeren Flächen - wie z.B. Motorhaube, Dach oder Seiten - auch verdeckte Innenbereiche wie beispielsweise Türeinstiege, Motor- oder auch Kofferinnenraum zu lackieren sind. Ein Lackieren derartiger Innenbereiche erfordert zunächst einen Öffnungsvorgang der zugehörigen Tür bzw. Klappe, einen nachfolgenden Lackiervorgang und einen abschließenden Schließvorgang von Tür bzw. Klappe.

Ein Halten der betreffenden Tür oder Klappe während des Lackiervorgangs ist bedarfsweise dann notwendig, wenn im Rohbau der Karosserie keine Raststellungen der Türen oder Klappen vorgesehen sind, um so das betreffende Element in einer definierten Position zur Karosserie zu halten. Eine Motorraumklappe würde sich ohne einen solchen Haltevorgang schwerkraftbedingt sofort nach dem Öffnen wieder absenken, wohingegen Türen zumeist in einer offenen, aber vergleichsweise undefinierten Stellung verharren würden. Bei Vorhandensein von Raststellungen in der jeweiligen Klappmechnanik kann ein Haltevorgang entfallen und es ist lediglich ein Öffnen und ein Schließen notwendig, da eine Raststellung eine definierte Position darstellt.

Im Fall von roboterbasierten Lackieranlagen für die Innenlackierung sind daher sowohl Lackierroboter, welche eine Zerstäubervorrichtung für Lack um ein zu lackierendes Werkstück führen, als auch sogenannte Handhabungsroboter notwendig. Diese Handhabungsroboter sind mit einem Öffnerwerkzeug ausgestattet und in der Lage, Öffnungs- und Schließvorgänge an Türen und/oder Klappen durchzuführen.

Nachteilig hierbei ist, dass die Arbeitsbereiche von Lackierrobotern und Handhabungsrobotern in weiten Teilen deckungsgleich sind, wobei ein Roboter für jeden anderen Roboter eine die Bewegungsfreiheit einschränkende Störkontur darstellt. So ist es für Türöffner beispielsweise üblich, diese bodennah und zwischen zu lackierender Automobilkarosserie und den Lackierrobotern anzuordnen, womit die Bewegungsfreiheit des jeweiligen Lackierroboters massiv eingeschränkt ist.

Zur Lösung dieser Problematik ist in der EP1263535 beispielsweise eine Roboteranlage offenbart, bei welcher auf jeweils zwei übereinander an beiden Seiten einer Lackierkabine längs angeordneten Verfahrschienen Lackierroboter und Handhabungsroboter befindlich sind, wobei sich übereinander befindliche Roboter jeweils längs einer Verfahrrichtung kreuzen können. Eine derartige Roboteranlage ermöglicht zudem auch eine Innenlackierung von Automobilkarosserien im sogenannten Line Tracking, also bei einer kontinuierlich von einer Fördervorrichtung bewegten Karosserie. Hierbei ist es insbesondere erforderlich, dass der Handhabungsroboter, welcher beispielsweise eine Motorhaube öffnet und hält, während des gesamten Vorgangs synchron mit der kontinuierlich bewegten Karosserie mitfährt.

Nachteilig hierbei ist, dass trotz Übereinanderanordnung eine erhebliche Überschneidung der jeweiligen Störkonturbereiche von Handhabungs- und Lackierrobotern gegeben ist und dass für die Türen der linken und der rechten Seite einer Karosserie wenigstens je ein separater Handhabungsroboter notwendig ist, was insbesondere bei Vorhandensein eines Rastmechanismus für die Türen zu hohen ungenutzten Zeiten der jeweiligen Handhabungsroboter führt.

Im Line Tracking Verfahren ist zudem bei Abschluss der Lackierung ein synchrones Zurückfahren der Roboter längs der Verfahrachsen notwendig, was sich negativ auf die verfügbare Taktzeit auswirkt. Zudem kann dieses zu weiteren ungenutzten Zeiten eines Roboters führen, wenn dieser nämlich vor Abschluss des kompletten Lackiervorgangs am Ende der Verfahrschiene angekommen ist und eigentlich für den nächsten Lackiervorgang wieder an den Anfang der Verfahrschiene zurückfahren müsste, dieses aber nicht kann, weil ein weiterer Roboter auf der selben Verfahrschiene noch nicht fertig ist und nicht gekreuzt werden kann.

In der WO 2009/146936 A1 ist eine Lackieranlage mit einem mittig oberhalb des Förderweges angeordneten Roboter angegeben, dessen Basis um eine senkrechte Drehachse drehbar ist. Eine derartige Anordnung bedingt aufgrund des zylinderähnlichen Arbeitsbereiches um die Roboterbasis eine eingeschränkte Beweglichkeit des Roboters in Förderrichtung, wodurch dieser für Handlingszwecke im Line Tracking ungeeignet ist.

Ausgehend von diesem Stand der Technik ist es Aufgabe der Erfindung, eine Roboteranlage mit einer möglichst flexiblen Anordnung von Handlings- und Lackierrobotern anzugeben, welche die zuvor genannten Nachteile vermeidet und welche auch für ein Lackieren im Line Tracking geeignet ist.

Diese Aufgabe wird gelöst durch eine Roboteranlage der eingangs genannten Art. Diese ist dadurch gekennzeichnet, dass die Roboterbasis des wenigstens einen Handhabungsroboters in einer Ebene oberhalb der Roboterbasen der wenigstens zwei Lackierroboter annähernd mittig über der Fördervorrichtung angeordnet ist und einen nach unten gerichteten und sich längs eines Abschnittes der Förderwegs zumindest annährend symmetrisch zu diesem erstreckenden Arbeitsbereich aufweist.

Durch die mittige Anordnung des wenigstens einen Handhabungsroboters über der Fördervorrichtung für die Werkstücke bzw. Automobilkarosserien ist dieser bei entsprechend langem Roboterarm - beispielsweise 3m - in der Lage, sowohl die seitlich links und rechts an den Karosseriewänden befindlichen Türen als auch die vorne befindliche Motorhaube und die hinten befindliche Heckklappe aus ein und derselben Relativposition zu öffnen, zu schließen und zu halten. Dadurch ist - insbesondere bei vorhandenem Rastmechanismus beispielsweise der Türen - die Anzahl der benötigten Handhabungsroboter in vorteilhafter Weise reduziert. Eine Verfahrschiene für den Handhabungsroboter ist zudem vermieden, wodurch der mechanische Aufbau der Roboteranlage vereinfacht ist.

Die Anordnung der Roboterbasis des Handhabungsroboters oberhalb einer Ebene, in welcher die Basen der wenigstens zwei Lackierroboter angeordnet sind, bewirkt, dass die Arbeitsbereiche dieser wenigstens drei Roboter sternförmig um das zu lackierende Werkstück verlaufen und sich in den Bereichen um die jeweiligen Roboterbasen in günstiger Weise gerade nicht überschneiden. Somit ist ein gegenseitiges Behindern der Roboter vorteilhaft auf den Bereich unmittelbar um das Werkstück reduziert, was für einen entsprechenden Lackierablauf aber unvermeidbar ist.

In der erfindungsgemäßen Roboteranlage ist die Basis des Handhabungsroboters um eine erste Drehachse drehbar mit einem Roboterfuß verbunden, welcher seinerseits hängend mit einer portalähnlichen Haltevorrichtung verbunden ist. Der Roboterfuß ist zumeist als Montageplatte mit einem Drehlager ausgeführt wobei der eigentliche Roboterarm ebenfalls mit der Roboterbasis verbunden ist. Der Roboterarm weist eine bestimmte Anzahl an Bewegungsfreiheitsgraden auf und führt bedarfsweise an seinem der Roboterbasis abgewandten Ende programmierbare Bewegungen relativ zum stationären Roboterfuß aus.

Bei einer derartigen hängenden Anordnung der Roboterbasis an einer portalähnlichen Haltevorrichtung ist ein Unterqueren des Handhabungsroboters durch ein auf der Fördervorrichtung befindlichen Werkstück besonders einfach realisiert wobei der Arbeitsbereich des Handhabungsroboters vorteilhaft vergrößert ist, da auch der Roboterarm die portalähnliche Haltevorrichtung unterqueren kann.

In der erfindungsgemäßen Roboteranlage ist die erste Drehachse des wenigstens einen Handhabungsroboters in eine Richtung des Förderweges geneigt. Dies ist insbesondere im Falle eines Line Tracking vorteilhaft und zwar um möglichst lange Bewegungen der Spitze des Roboterarms parallel zum Förderweg zu realisieren.

Im Line Tracking muss der Handhabungsroboter beispielsweise eine Motorhaube über einen zumeist linearen Verfahrweg geöffnet halten, welcher sich aus der Fördergeschwindigkeit der Karosserie und der für das Lackieren des Motorinnenraums benötigten Zeit ergibt. Bei einer Fördergeschwindigkeit von beispielsweise 4m/min und einer benötigten Lackierzeit von 35s zuzüglich 5s für Öffnen und 5s für Schließen der Motorhaube ergibt sich beispielsweise ein Weg von 3m, längs dessen die Spitze des Arms des Handhabungsroboters zumindest während des Lackiervorgangs synchron zur Karosserie zu führen ist.

Ein Neigen der ursächlich senkrecht angeordneten ersten Drehachse des Handhabungsroboters ermöglicht nämlich, dass die gewünschten derartigen linearen Bewegungen der Roboterarmspitze mit zunehmendem Neigungswinkel der ersten Roboterachse ein Drehen der Roboterbasis vermeiden und vielmehr von den Bewegungsfreiheitsgraden des Roboterarms selbst ausführbar sind. Eine Reduktion der Drehbewegungen der ersten Roboterachse bewirkt in vorteilhafter Weise, dass der Bereich der Störkontur um die Basis des Handhabungsroboters reduziert wird.

In der erfindungsgemäßen Roboteranlage verläuft die erste Drehachse des wenigstens einen Handhabungsroboters annähernd parallel zum Förderweg, womit die Störkontur des betreffenden Handhabungsroboters auf einen etwa keilförmig von der Roboterbasis aus nach unten verlaufenden Bereich reduziert wird:

Bildlich gesprochen bedeutet also eine entsprechend dem Stand der Technik senkrecht ausgerichtete erste Drehachse des Handhabungsroboters einen Arbeitsbereich, welcher ansatzweise als senkrechter Zylinder um die Roboterbasis ausgeprägt ist. Dieser stößt bei einer Anordnung in Bearbeitungszonenmitte bereichsweise beiderseits an gegebenenfalls vorgesehene Begrenzungswände und stellt somit eine erhebliche Störkontur für seitlich angeordnete Lackierroboter dar. Bei einer komplett waagerecht ausgerichteten ersten Drehachse verläuft dieser den Arbeitsbereich beschreibende Zylinder also dementsprechend ebenfalls waagerecht und beschreibt letztendlich lediglich ein keilähnliches nach unten gerichtetes Segment des eigentlichen Zylinders, was sich besonders vorteilhaft auf die Störkontur des Handhabungsroboters auswirkt.

In einer Ausführungsform der erfindungsgemäßen Roboteranlage ist ein erster Teil des Roboterarms des wenigstens einen Handhabungsroboters an seinem einem Ende radial zur ersten Drehachse um eine zweite Drehachse schwenkbar mit der Roboterbasis verbunden. Die radiale Schwenkbarkeit begründet neben einen Teil des Radius des Arbeitsbereiches um die Roboterbasis bei mittig angeordnetem Handhabungsroboter auch eine Symmetrie, welche sich aufgrund der zumeist auch symmetrischen Werkstücke bzw. Automobilkarosserien vorteilhaft auswirkt. Eine Tür auf der linken Seite einer Karosserie ist also mit einer näherungsweise spiegelsymmetrischen Bewegung des Handhabungsroboters zu öffnen wie eine Tür auf der rechten Seite.

Entsprechend vorteilhaft für eine Symmetrie wirkt sich auch aus, wenn erfindungsgemäß am Ende des ersten Teils des Roboterarms des wenigstens einen Handhabungsroboters ein zweiter Teil des Roboterarms um eine dritte Drehachse radial zur ersten Drehachseschwenkbar verbunden ist, wobei zweite und dritte Drehachse näherungsweise parallel sind. Der erste und zweite Teil des Roboterarms sind somit lediglich in einer gemeinsamen Ebene bewegbar, in welcher auch die erste Drehachse verläuft. Der Radius des zylinder- bzw. keilähnlich verlaufenden Arbeitsbereiches ist überwiegend von den beiden Teilen des Roboterarmes bestimmt.

Zur Sicherstellung eines keilförmig ausgeprägten Arbeitsbereiches bei geneigter erster Achse erweist es sich als vorteilhaft, einen maximalen Drehbereich der Roboterbasis des wenigstens einen Handhabungsroboters um die erste Drehachse symmetrisch beiderseits einer senkrechten Ebene vorzugeben, wobei die Ebene ihrerseits durch die erste Drehachse bestimmt ist. Bei einer mittigen Anordnung der Roboterbasis des Handhabungsroboters über dem Boden der Bearbeitungszone in einer Höhe von beispielsweise 1,8m - 3,0m und bei gleichzeitiger maximaler Breite einer Automobilkarosserie mit geöffneten Türen von beispielsweise 3,5 m ergibt sich je nach sonstigen Randbedingungen ein maximaler Gesamtöffnungswinkel des keilähnlichen Arbeitsbereiches um die erste Drehachse von 90° bis 120°.

In besonders vorteilhafter Weise verfügt der wenigstens eine Handhabungsroboter und/oder wenigstens einer der Lackierroboter jeweils über wenigstens sechs Bewegungsfreiheitsgrade. In diesem Fall ist es nämlich möglich, jeden Raumpunkt im Arbeitsbereich des jeweiligen Roboters in jeder Orientierung der Roboterarmspitze anzufahren. Neben den zuvor beschriebenen drei Bewegungsfreiheitsgraden der ersten bis dritten Drehachse werden üblicherweise drei weitere Bewegungsfreiheitsgrade mittels eines Handgelenkes realisiert, welches am zweiten Ende des zweiten Roboterarmteils angebracht ist.

Entsprechend einer weiteren Variante der erfindungsgemäßen Roboteranlage ist der wenigstens eine Handhabungsroboter an dem frei beweglichen Ende seines Arms mit einem Öffnerwerkzeug versehen, welches geeignet ist, in Kontakt mit zu bewegenden Teilen des Werkstückes gebracht zu werden und so bei geeigneter Bewegung des Roboters ein Öffnen, Halten oder Schließen einer Tür oder Klappe zu bewirken. Dies ist im einfachsten Fall ein Stab, welcher in einen für ein Fenster vorgesehenen Türspalt eingreift oder von unten gegen einen nicht zu lackierenden Bereich der Motorhaube greift. Es ist aber auch denkbar, die Automobilkarosserie mit sogenannten Betriebsmitteln zu versehen, also Öffen- und Schließvorrichtungen an die zu bewegenden Teile anzubringen, in welche ein Eingriff eines Öffnerwerkzeuges besonders einfach ist.

Besonders vorteilhaft erweist es sich, zwischen dem frei beweglichen Ende des Arms des Handhabungsroboters und dem Öffnerwerkzeug eine Vorrichtung zur Kraftmessung vorzusehen. Somit ist es möglich, bei eventuellem Klemmen einer Tür / Klappe oder bei einer Verformung eines Betriebsmittels eine zu hohe Kraft zu erkennen und eine Abschaltung des Handhabungsroboters zu bewirken.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
Fig. 1 eine erste exemplarische Roboteranlage in einer Frontalansicht,
Fig. 2 eine zweite exemplarische Roboteranlage in einer Frontalansicht,
Fig. 3 eine dritte exemplarische Roboteranlage in einer Draufsicht,
Fig. 4 eine vierte exemplarische Roboteranlage in einer Seitenansicht,
Fig. 5 eine fünfte exemplarische Roboteranlage in einer Draufsicht und
Fig. 6 mehrere Handhabungsroboter mit Werkstück.

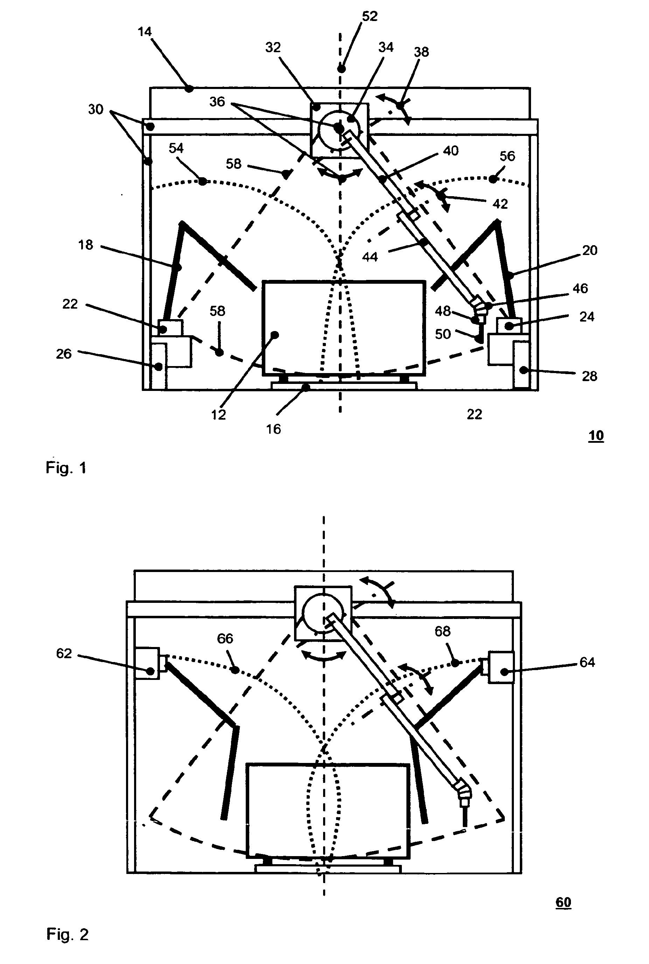

Fig. 1 zeigt eine erste exemplarische Roboteranlage in einer frontalen Schnittansicht 10. Ein Werkstück 12, in diesem Fall eine vereinfacht angedeutete Automobilkarosserie, ist auf einer ersten Fördervorrichtung 16, beispielsweise einem Kettenförderer, stehend in einer ersten Bearbeitungszone 14 dargestellt. Die Bearbeitungszone 14 entspricht in diesem Fall einer Lackierkabine, welche Seitenwände, von einer jeweiligen Einförderöffnung durchbrochene Stirnwände und eine Decke aufweist, welche ihrerseits zumeist mit Mitteln zur Klimatisierung der Lackierkabine versehen ist. Beiderseits der Fördervorrichtung 16 sind nahe den Seitenwänden zwei Lackierroboter 18, 20 dargestellt, welche über eine jeweilige Basis 22, 24 verfügen und welche auf einer jeweiligen bodennahen Verfahrschiene 26, 28 angeordnet sind. Die Lackierroboter 18, 20 sind nur als Prinzipskizze angedeutet, verfügen jedoch über jeweils insgesamt sieben Bewegungsfreiheitsgrade und sind mit einem an der jeweiligen Spitze des Roboterarms angebrachten Lackzerstäuber ausgestattet.

Ein erster Handhabungsroboter 32 ist mit seinem Roboterfuß mit einer ersten portalähnlichen Haltevorrichtung 30 verbunden und mittig über der Fördervorrichtung 16 und der darauf befindlichen Karosserie 12 angeordnet. Die portalähnliche Haltevorrichtung 30 ist beispielsweise als geschweißter Stahlrahmen ausgeführt, welcher die statischen und dynamischen Kräfte, welche auf den Handhabungsroboter 32 wirken, nach unten abträgt. Mit dem Roboterfuß um eine erste aus der Schnittebene der Darstellung heraustretende Drehachse 36 drehbar verbunden ist eine Roboterbasis 34, wobei die Drehbewegung der Roboterbasis 34 sowie alle weiteren Bewegungen selbstverständlich über jeweilige Antriebe erfolgen, welche von einer nicht gezeigten Robotersteuerung gesteuert sind.

Mit der Roboterbasis 34 verbunden ist weiterhin ein erster Teil 40 des Roboterarms, welcher an seinem einen Ende radial zur ersten Drehachse 36 um eine zweite Drehachse 38 schwenkbar ist. An dem zweiten Ende des ersten Teils 40 ist um eine dritte Drehachse 42 schwenkbar verbunden ein zweiter Teil 44 des Roboterarms angeordnet, wobei sich erster 40 und zweiter 44 Teil in einer gemeinsamen Ebene bewegen, welche von der ersten Drehachse 36 geschnitten ist. Diese beiden Teile 40, 44 bilden den Hauptteil des Roboterarms und bestimmen auch einen wesentlichen Teil von dem Arbeitsbereich 58, welcher sich keilähnlich nach unten gerichtet von der ersten Drehachse 36 aus in die erste Bearbeitungszone 14 erstreckt.

In der Schnittansicht 10 ist gut zu sehen, dass durch die keilähnliche Erstreckung des Arbeitsbereiches 58 im oberen Kabinenbereich eine Überlappung mit den Arbeitsbereichen 54 und 56 der Lackierroboter 18 und 20 vorteilhaft vermieden ist. Um das Werkstück 12 bzw. die Automobilkarosserie herum ist jedoch zwangsläufig eine Überlappung der Arbeitsbereiche 58 und 54 bzw. 58 und 56 vorgesehen und notwendig.

Am Ende des im wesentlichen von dem ersten 40 und zweiten 44 Teil gebildeten Roboterarms ist ein Handgelenk 46 vorgesehen, welches in diesem Fall über zusätzliche drei Freiheitsgrade der Bewegung verfügt, so dass der Handhabungsroboter 32 insgesamt sechs Bewegungsfreiheitsgrade aufweist. Mit sechs Bewegungsfreiheitsgraden ist jeder Punkt innerhalb des Arbeitsbereiches 58 des ersten Handhabungsroboters 32 in jeder Orientierung erreichbar. Am anderen Ende des Handgelenkes 46 ist eine Kraftmessvorrichtung 48 und mit dieser verbunden ein Öffnerwerkzeug 50 vorgesehen, welches beispielsweise als Stahlstab ausgebildet ist. Das Öffnerwerkzeug 50 ist somit ohne Einschränkungen bezüglich der Orientierung beispielsweise in einen nicht gezeigten für ein Fenster vorgesehenen Spalt der Automobilkarosserie 12 einführbar.

Im Idealfall wirken auf die Kraftmessvorrichtung 48 nur die Kräfte, welche bei einem normalen Öffnungs-, Halte- oder Schließvorgang auftreten, beispielsweise eine Federkraft beim Überwinden einer Raststellung einer Tür oder auch die normale Gewichtskraft beim Halten einer Motorhaube. Unvorhergesehenerweise ist es jedoch möglich, dass erhöhte Kräfte auftreten, beispielsweise wenn eine Motorhaube aus einem zuvor erfolgten Lackierprozess in ungewollter Weise mit der Karosserie 12 verklebt ist. In diesem Fall wäre die vom Handhabungsroboter 32 aufzubringende Kraft höher als ein Grenzwert und der Programmablauf des Handhabungsroboters 32 wird unterbrochen.

Die Fig. 2 zeigt eine der zuvor gezeigten Roboteranlage sehr ähnliche zweite Roboteranlage in einer Schnittansicht 60. Hier sind jedoch im unteren Bereich der Bearbeitungszone keine Lackierroboter auf einer Verfahrschiene mit sieben Bewegungsfreiheitsgraden vorgesehen, vielmehr sind im oberen Bearbeitungszonenbereich beidseitig zwei Lackierroboter 62, 64 mit jeweils sechs Bewegungsfreiheitsgraden vorgesehen, deren Roboterbasen sich dennoch unter der Roboterbasis des dargestellten Handhabungsroboters befinden. Die Arbeitsbereiche 66, 68 dieser oben angeordneten Lackierroboter 62, 64 sind schräg nach unten in die Bearbeitungszone gerichtet und weisen eine vorteilhaft geringe Überlappung mit dem Arbeitsbereich des Handhabungsroboters auf. Diese Anordnung ermöglicht darüber hinaus auch in vorteilhafter Weise, die Bearbeitungszone etwas schmaler, beispielsweise 4,5m anstelle von 5,5m, auszuführen. Die Bearbeitungsbereiche 66, 68 sind im oberen Bereich willkürlich begrenzt, beispielsweise durch maximale Drehwinkel von verschieden Drehachsen. Eine Bewegung außerhalb dieser Arbeitsbereiche ist zur Lackierung der Automobilkarosserie weder notwendig noch sinnvoll.

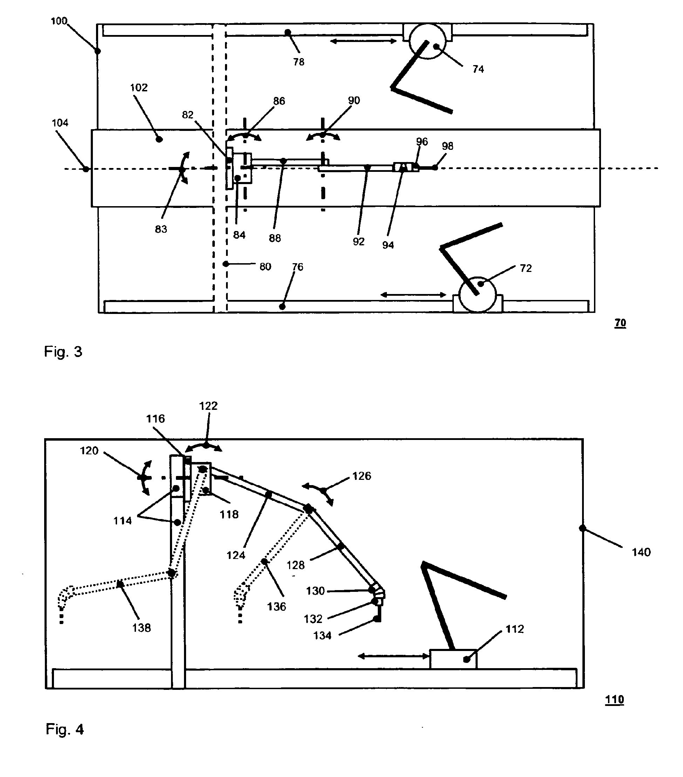

Fig. 3 zeigt eine Draufsicht auf eine dritte Roboteranlage 70. Eine Bearbeitungszone 100 wird von einer Fördervorrichtung 102, beispielsweise einem Kettenförderer, längs eines Förderwegs 104 durchquert, wobei in diesem Fall kein Werkstück auf der Fördervorrichtung 102 dargestellt ist. Beiderseits der Fördervorrichtung 104 sind zwei Lackierroboter 72, 74 dargestellt, welche auf seitlichen Verfahrschienen 76, 78 längs des Förderweges 104 bewegbar sind. Derartige Lackierroboter sind insbesondere auch für ein Lackieren im Line Tracking geeignet, da sie synchron zu einer von der Fördervorrichtung 102 bewegten Karosserie längs ihrer Verfahrschienen 76, 78 bewegbar sind.

Oberhalb der Fördervorrichtung 102 ist ein zweiter Handhabungsroboter 82 mit seinem Roboterfuß mittig an einer zweiten portalähnlichen Haltevorrichtung 80 montiert. Dieser ist eine um eine erste parallel zum Förderweg 104 verlaufende Drehachse 83 drehbar mit einer zugehörigen Roboterbasis 84 verbunden. An dieser ist entsprechend den zuvor gezeigten Figuren um eine zweite Drehachse 86 radial zur ersten Drehachse 83 schwenkbar an seinem einen Ende ein erster Teil 88 des Roboterarms befestigt, welcher an seinem anderen Ende um eine dritte Drehachse 90 schwenkbar mit einem zweiten Teil 92 des Roboterarms verbunden ist. Zweite 86 und dritte 90 Drehachse sind hier wie auch in den Figuren zuvor parallel angeordnet, so dass sich die beiden Teile 88, 92 des Roboterarms in einer Ebene bewegen, durch welche auch die erste Drehachse 83 verläuft. Konstruktionsbedingt kann es sich hierbei auch um mehrere parallele Ebenen handeln, welche geringfügig um beispielsweise eine Bauteilbreite gegeneinander versetzt sind. Dies ist aber dennoch begrifflich als ein und dieselbe Ebene aufzufassen.

Am Ende des zweiten Teiles 128 sind ein Handgelenk 94, eine Kraftmessvorrichtung 130 und ein Öffnerwerkzeug 134 vorgesehen. Der Roboterarm ist in dieser Darstellung in einem gestreckten Zustand über der Fördervorrichtung 102 dargestellt. Dies ist beispielsweise eine geeignete Position, um eine Motorhaube einer von rechts in die Bearbeitungszone 100 eingeförderten Karosserie zu öffnen, wobei in diesem Fall das Öffnerwerkzeug 134 nach oben gerichtet sein müsste.

Fig. 4 zeigt nun eine der dritten Roboteranlage 70 sehr vergleichbare vierte Roboteranlage in einer Seitenansicht 110. Entsprechend ist in einer dritten Bearbeitungszone 140 bodennah auf einer Verfahrschiene ein Lackierroboter 112 dargestellt, wobei ein gegenüber liegender Lackierroboter nicht sichtbar ist. Auf einer dritten portalähnlichen Haltevorrichtung 114 hängend montiert ist ein dritter Handhabungsroboter 116, dessen Basis 118 um eine waagerechte erste Drehachse 120 drehbar mit dem zugehörigen Roboterfuß verbunden ist. Mit der Basis verbunden sind wieder ein erster 124 und ein zweiter 128 Teil des Roboterarms, welche über eine zweite 122 und dritte 126 Drehachse in einer Ebene schwenkbar miteinander verbunden sind, wobei die Spitze des Roboterarms von einem Handgelenk 130, einer Kraftmessvorrichtung 132 und einem Öffnerwerkzeug 134 gebildet ist.

In dieser Seitenansicht gezeigt sind auch weitere Beispielpositionen 136 und 138, welche der Roboterarm einnehmen kann, wobei entsprechend der Bezugsziffer 138 der Roboterarm die portalähnliche Haltevorrichtung 114 mittig unterquert. Es ist gut zu sehen, wie somit eine parallel zum Förderweg verlaufende Haltebewegung über eine längere Strecke, beispielsweise 4m, möglich ist, wobei eine derartige Bewegung fast ausschließlich aus dem Roboterarm, also dem ersten 124 und zweiten 128 Teil und dem Handgelenk 130 realisiert ist, wohingegen eine Drehbewegung der Basis 118 um die erste Drehachse 120 nicht erfolgt.

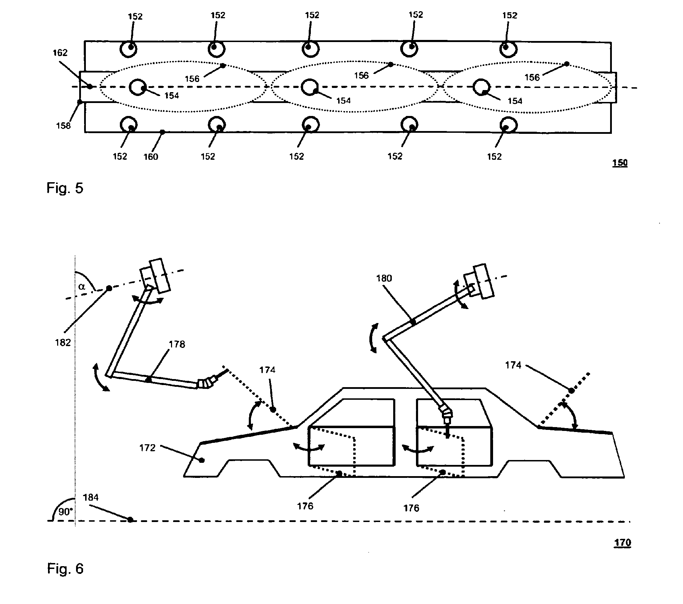

Fig. 5 zeigt eine Draufsicht 150 auf eine fünfte Roboteranlage. Deren Bearbeitungszone 160 weist beiderseits der Fördervorrichtung 158 und des Förderwegs 162 insgesamt je Seite fünf mit der Bezugsziffer 152 angedeutete Lackierroboter an. Mittig oberhalb der Fördervorrichtung 158 sind insgesamt drei Handhabungsroboter mit sich länglich erstreckenden nach unten gerichteten Arbeitsbereichen 156 vorgesehen. Diese Arbeitsbereiche 156 können sich längs des Förderwegs 162 auch überlappen, so dass bei einer besonders hohen Fördergeschwindigkeit im Line Tracking - beispielsweise 7m/min - eine bereits von einem Handhabungsroboter geöffnete und gehaltene Motorhaube an einen weiteren längs des Förderweges 162 benachbart angeordneten Handhabungsroboter übergeben werden kann. Selbstverständlich ist auch eine Kombination von erfindungsgemäß angeordneten Handhabungsrobotern, beispielsweise für Hauben oder Heckklappen, mit konventionell bodennah angeordneten Handhabungsrobotern möglich.

Fig. 6 zeigt zwei Handhabungsroboter 178, 180 und ein Werkstück bzw. eine Automobilkarosserie in einer gemeinsamen Seitenansicht 170. Die Automobilkarosserie 172 weist eine Motorraumklappe und eine Heckklappe mit einer gemeinsamen Bezugsziffer 174 auf, welche in geschlossenem Zustand mit einer dicken Linie und in geöffnetem Zustand mit einer gestrichelten Linie angedeutet sind. Ebenso sind zwei Türen in geschlossenem und geöffnetem Zustand mit einer gemeinsamen Bezugsziffer 176 angedeutet, wobei zwei weitere Türen auf der gegenüberliegenden Seite der Automobilkarosserie nicht sichtbar sind. Der Handhabungsroboter 178 ist mittig über Automobilkarosserie in einem die Motorhaube haltenden Zustand dargestellt. Die erste Drehachse 182 ist gegenüber dem Verfahrweg mit der Bezugsziffer 184 um den Winkel 90°-α geneigt. Es kann sich nämlich bedarfsweise ein Neigungswinkel der ersten Drehachse zwischen 30° und >0° (0° = parallel zum Förderweg) als optimal bezüglich einer Erreichbarkeit des Handhabungsroboters erweisen. Dies hängt jedoch von der Art und Ausführung des zu lackierenden Werkstückes bzw. der Automobilkarosserie 172 ab.

Der Handhabungsroboter ist in diesem Beispiel dafür vorgesehen, die Motorhaube im Line Tracking zu öffnen, während des Lackiervorgangs mit einem nicht dargestellten Lackierroboter zu halten und nachfolgend zu schließen. Der andere Handhabungsroboter 180 ist in diesem Beispiel dafür vorgesehen, alle vier Türen 176 sequentiell zu öffnen und nach dem Lackieren wieder zu schließen, wobei ein Haltevorgang aufgrund eines Rastmechanismus in den Türen in vorteilhafter Weise entfällt und diese Aufgabe von einem einzigen Handhabungsroboter durchführbar ist.

### Bezugszeichenliste

- 10: erste exemplarische Roboteranlage
- 12: erstes Werkstück
- 14: erste Bearbeitungszone
- 16: erste Fördervorrichtung
- 18: erster Lackierroboter
- 20: zweiter Lackierroboter
- 22: Basis des ersten Lackierroboters
- 24: Basis des zweiten Lackierroboters
- 26: Verfahrschiene des ersten Lackierroboters
- 28: Verfahrschiene des zweiten Lackierroboters
- 30: erste portalähnliche Haltevorrichtung
- 32: erster Handhabungsroboter mit Roboterfuß
- 34: Basis des ersten Handhabungsroboters
- 36: erste Drehachse des ersten Handhabungsroboters
- 38: zweite Drehachse des ersten Handhabungsroboters
- 40: erster Teil des Roboterarms des ersten Handhabungsroboters
- 42: dritte Drehachse des ersten Handhabungsroboters
- 44: zweiter Teil des Roboterarms des ersten Handhabungsroboters
- 46: Handgelenk des ersten Handhabungsroboters
- 48: Kraftmessvorrichtung
- 50: Öffnerwerkzeug
- 52: durch erste Drehachse bestimmte senkrechte Ebene
- 54: Arbeitsbereich des ersten Lackierroboters
- 56: Arbeitsbereich des zweiten Lackierroboters
- 58: Arbeitsbereich des ersten Handhabungsroboters
- 60: zweite exemplarische Roboteranlage
- 62: dritter Lackierroboter
- 64: vierter Lackierroboter
- 66: Arbeitsbereich des dritten Lackierroboters
- 68: Arbeitsbereich des vierten Lackierroboters
- 70: dritte exemplarische Roboteranlage
- 72: fünfter Lackierroboter
- 74: sechster Lackierroboter
- 76: Verfahrschiene des fünften Lackierroboters
- 78: Verfahrschiene des sechsten Lackierroboters
- 80: zweite portalähnliche Haltevorrichtung
- 82: zweiter Handhabungsroboter mit Roboterfuß
- 83: erste Drehachse des zweiten Handhabungsroboters
- 84: Basis des zweiten Handhabungsroboters
- 86: zweite Drehachse des zweiten Handhabungsroboters
- 88: erster Teil des Roboterarms des zweiten Handhabungsroboters
- 90: dritte Drehachse des zweiten Handhabungsroboters
- 92: zweiter Teil des Roboterarms des zweiten Handhabungsroboters
- 94: Handgelenk des zweiten Handhabungsroboters
- 96: Kraftmessvorrichtung
- 98: Öffnerwerkzeug
- 100: zweite Bearbeitungszone
- 102: zweite Fördervorrichtung
- 104: Förderweg
- 110: vierte exemplarische Roboteranlage
- 112: siebter Lackierroboter
- 114: dritte portalähnliche Haltevorrichtung
- 116: dritter Handhabungsroboter mit Roboterfuß
- 118: Roboterbasis des dritten Handhabungsroboters
- 120: erste Drehachse des dritten Handhabungsroboters
- 122: zweite Drehachse des dritten Handhabungsroboters
- 124: erster Teil des Roboterarms des dritten Handhabungsroboters
- 126: dritte Drehachse des dritten Handhabungsroboters
- 128: zweiter Teil des Roboterarms des dritten Handhabungsroboters
- 130: Handgelenk des dritten Handhabungsroboters
- 132: Kraftmessvorrichtung
- 134: Öffnerwerkzeug
- 136: Roboterarm des dritten Handhabungsroboters in zweiter Position
- 138: Roboterarm des dritten Handhabungsroboters in dritter Position
- 140: dritte Bearbeitungszone
- 150: fünfte exemplarische Roboteranlage
- 152: achte Lackierroboter
- 154: vierte Handhabungsroboter
- 156: Arbeitsbereiche der vierten Handhabungsroboter
- 158: dritte Fördervorrichtung
- 160: vierte Bearbeitungszone
- 162: Förderweg
- 170: mehrere Handhabungsroboter mit Werkstück
- 172: zweites Werkstück
- 174: Klappe
- 176: Tür
- 178: fünfter Handhabungsroboter
- 180: sechster Handhabungsroboter
- 182: erste Drehachse des fünften Handhabungsroboters
- 184: Förderweg

## Patentansprüche

1. Roboteranlage (10, 60, 70, 110, 150) zur Lackierung von Werkstücken (12, 172), mit wenigstens einer Bearbeitungszone (14, 100, 140, 160), welche von einer Fördervorrichtung (16, 102, 158) für die Werkstücke (12, 172) entlang eines Förderweges (104, 162, 184) durchquert ist und welche wenigstens zwei beiderseits der Fördervorrichtung (16, 102, 158) angeordnete Lackierroboter (18, 20, 62, 64, 72, 74, 152) mit einer zugehörigen Roboterbasis (22, 24) und wenigstens einen Handhabungsroboter (32, 82, 116, 154, 178, 180) mit einer zugehörigen Roboterbasis (34, 84, 118) aufweist, wobei die Roboterbasis (34, 84, 118) des wenigstens einen Handhabungsroboters (32, 82, 116, 154, 178, 180) in einer Ebene oberhalb der Roboterbasen (22, 24) der wenigstens zwei Lackierroboter (18, 20, 62, 64, 72, 74, 152) annähernd mittig über der Fördervorrichtung (16, 102, 158) angeordnet ist und wobei der wenigstens eine Handhabungsroboter (32, 82, 116, 154, 178, 180) einen nach unten gerichteten und sich längs eines Abschnittes der Förderwegs (104, 162, 184) zumindest annähernd symmetrisch zu diesem (104, 162, 184) erstreckenden Arbeitsbereich (58, 156) aufweist, **dadurch gekennzeichnet, dass**
die Basis (34, 84, 118) des Handhabungsroboters (32, 82, 116, 154, 178, 180) um eine erste gegenüber dem Förderweg (104, 162, 184) um einen Winkel 90°- α geneigte und annähernd parallel zum Förderweg (104, 162, 184) verlaufende Drehachse (36, 83, 120, 182) drehbar mit einem Roboterfuß verbunden ist, welcher seinerseits hängend mit einer portalähnlichen Haltevorrichtung (30, 80, 114) verbunden ist.

2. Roboteranlage nach Anspruch 1, **dadurch gekennzeichnet, dass** ein erster Teil (40, 88, 124) eines Roboterarms des wenigstens einen Handhabungsroboters (32, 82, 116, 154, 178, 180) an seinem einem Ende radial zur ersten Drehachse (36, 83, 120, 182) um eine zweite Drehachse (38, 86, 122) schwenkbar mit der Roboterbasis (34, 84, 118) verbunden ist.

3. Roboteranlage nach Anspruch 2, **dadurch gekennzeichnet, dass** mit dem anderen Ende des ersten Teils (40, 88, 124) des Roboterarms des wenigstens einen Handhabungsroboters (32, 82, 116, 154, 178, 180) ein zweiter Teil (44, 92, 128) des Roboterarms um eine dritte Drehachse (42, 90, 126) radial zur ersten Drehachse (36, 83, 120, 182) schwenkbar verbunden ist.

4. Roboteranlage nach einem der vorherigen Ansprüche, **dadurch gekennzeichnet, dass** ein maximaler Drehbereich der Roboterbasis (34, 84, 118) des wenigstens einen Handhabungsroboters (32, 82, 116, 154, 178, 180) um die erste Drehachse (36, 83, 120, 182) symmetrisch beiderseits einer senkrechten Ebene (52) vorgegeben ist, welche durch die erste Drehachse (36, 83, 120, 182) bestimmt ist.

5. Roboteranlage nach einem der vorherigen Ansprüche, **dadurch gekennzeichnet, dass** wenigstens ein Handhabungsroboter (32, 82, 116, 154, 178, 180) und/oder Lackierroboter (18, 20, 62, 64, 72, 74, 152) jeweils wenigstens sechs Bewegungsfreiheitsgrade aufweisen.

6. Roboteranlage nach einem der vorherigen Ansprüche, **dadurch gekennzeichnet, dass** der wenigstens eine Handhabungsroboter (32, 82, 116, 154, 178, 180) an dem frei beweglichen Ende seines Arms mit einem Öffnerwerkzeug (50, 98, 134) versehen ist.

7. Roboteranlage nach Anspruch 6, **dadurch gekennzeichnet, dass** zwischen dem frei beweglichen Ende des Arms des Handhabungsroboters und dem Öffnerwerkzeug (50, 98, 134) eine Vorrichtung zur Kraftmessung (48, 96, 132) vorgesehen ist.

## Claims

1. Robot assembly (10, 60, 70, 110, 150) for painting workpieces (12, 172), comprising at least one processing zone (14, 100, 140, 160), through which a conveying apparatus (16, 102, 158) for the workpieces (12, 172) traverses along a conveying path (104, 162, 184) and which has at least two painting robots (18, 20, 62, 64, 72, 74, 152), arranged on both sides of the conveying apparatus (16, 102, 158) and having an associated robot base (22, 24), and at least one handling robot (32, 82, 116, 154, 178, 180) with an associated robot base (34, 84, 118), the robot base (34, 84, 118) of the at least one handling robot (32, 82, 116, 154, 178, 180) being arranged in a plane above the robot bases (22, 24) of the at least two painting robots (18, 20, 62, 64, 72, 74, 152) approximately centrally over the conveying apparatus (16, 102, 158), and the at least one handling robot (32, 82, 116, 154, 178, 180) having a working region (58, 156), which is directed downwards and extends along a section of the conveying path (104, 162, 184) at least approximately symmetrically thereto (104, 162, 184), **characterized in that** the base (34, 84, 118) of the handling robot (32, 82, 116, 154, 178, 180) is connected to a robot foot rotatably about a first axis of rotation (36, 83, 120, 182), which is inclined through an angle of 90°-α with respect to the conveying path (104, 162, 184) and runs approximately parallel to the conveying path (104, 162, 184), said robot foot for its part being connected in suspended fashion to a portion to a portal-like holding apparatus (30, 80, 114).

2. Robot assembly according to Claim 1, **characterized in that** a first part (40, 88, 124) of a robot arm of the at least one handling robot (32, 82, 116, 154, 178, 180) is connected at one of its ends to the robot base (34, 84, 118) pivotably about a second axis of rotation (38, 86, 122) radially with respect to the first axis of rotation (36, 83, 120, 182).

3. Robot assembly according to Claim 2, **characterized in that** a second part (44, 92, 128) of the robot arm is connected to the other end of the first part (40, 88, 124) of the robot arm of the at least one handling robot (32, 82, 116, 154, 178, 180) pivotably about a third axis of rotation (42, 90, 126) radially with respect to the first axis of rotation (36, 83, 120, 182).

4. Robot assembly according to one of the preceding claims, **characterized in that** a maximum rotation region of the robot base (34, 84, 118) of the at least one handling robot (32, 82, 116, 154, 178, 180) about the first axis of rotation (36, 83, 120, 182) is predetermined symmetrically on both sides of a perpendicular plane (52), which is determined by the first axis of rotation (36, 83, 120, 182).

5. Robot assembly according to one of the preceding claims, **characterized in that** at least one handling robot (32, 82, 116, 154, 178, 180) and/or painting robot (18, 20, 62, 64, 72, 74, 152) each have at least six degrees of movement freedom.

6. Robot assembly according to one of the preceding claims, **characterized in that** the at least one handling robot (32, 82, 116, 154, 178, 180) is provided at the freely movable end of its arm with an opener tool (50, 98, 134).

7. Robot assembly according to Claim 6, **characterized in that** an apparatus for force measurement (48, 96, 132) is provided between the freely movable end of the arm of the handling robot and the opener tool (50, 98, 134).

## Revendications

1. Installation de robot (10, 60, 70, 110, 150) servant à peindre des pièces usinées (12, 172), avec au moins une zone de traitement (14, 100, 140, 160) traversée par un dispositif de transport (16, 102, 158) de pièces usinées (12, 172) le long d'une trajectoire de transport (104, 162, 184) et comportant au moins deux robots de laquage (18, 20, 62, 64, 72, 74, 152) dotés d'une base de robot (22, 24) associée et disposés des deux côtés du dispositif de transport (16, 102, 158) et au moins un robot de manipulation (32, 82, 116, 154, 178, 180) doté d'une base de robot (34, 84, 118) associée, la base de robot (34, 84, 118) de l'au moins un robot de manipulation (32, 82, 116, 154, 178, 180) étant disposée dans un plan placé au-dessus des bases de robot (22, 24) des au moins deux robots de laquage (18, 20, 62, 64, 72, 74, 152), approximativement au centre au-dessus du dispositif de transport (16, 102, 158), et l'au moins un robot de manipulation (32, 82, 116, 154, 178, 180) comportant une zone de travail (58, 156) orientée vers le bas et s'étendant le long d'une section de la trajectoire de transport (104, 162, 184) au moins approximativement symétriquement par rapport à celle-ci (104, 162, 184), **caractérisée en ce que** la base (34, 84, 118) du robot de manipulation (32, 82, 116, 154, 178, 180) est reliée à un pied de robot de façon à pouvoir tourner autour d'un premier axe de rotation (36, 83, 120, 182) incliné par rapport à la trajectoire de transport (104, 162, 184) selon un angle de 90° - α et s'étendant approximativement parallèlement à la trajectoire de transport (104, 162, 184), ledit pied étant relié pour sa part à un dispositif de support (30, 80, 114) en forme de portail.

2. Installation de robot selon la revendication 1, **caractérisée en ce qu'**une première partie (40, 88, 124) d'un bras de robot de l'au moins un robot de manipulation (32, 82, 116, 154, 178, 180) est reliée à la base de robot (34, 84, 118) de façon à pouvoir pivoter autour d'un deuxième axe de rotation (38, 86, 122) au niveau de sa première extrémité placée dans le plan radial par rapport au premier axe de rotation (36, 83, 120, 182).

3. Installation de robot selon la revendication 2, **caractérisée en ce qu'**une deuxième partie (44, 92, 128) du bras de robot est reliée à l'autre extrémité de la première partie (40, 88, 124) du bras de robot de l'au moins un robot de manipulation (32, 82, 116, 154, 178, 180) de façon à pouvoir pivoter autour d'un troisième axe de rotation (42, 90, 126) placé dans le plan radial par rapport au premier axe de rotation (36, 83, 120, 182).

4. Installation de robot selon l'une quelconque des revendications précédentes, **caractérisée en ce qu'**une plage de rotation maximale de la base de robot (34, 84, 118) de l'au moins un robot de manipulation (32, 82, 116, 154, 178, 180) est prédéfinie autour du premier axe de rotation (36, 83, 120, 182) placé symétriquement des deux côtés d'un plan (52) vertical défini par le premier axe de rotation (36, 83, 120, 182).

5. Installation de robot selon l'une quelconque des revendications précédentes, **caractérisée en ce qu'**au moins un robot de manipulation (32, 82, 116, 154, 178, 180) et/ou les robots de laquage (18, 20, 62, 64, 72, 74, 152) comportent respectivement au moins six degrés de liberté de déplacement.

6. Installation de robot selon l'une quelconque des revendications précédentes, **caractérisée en ce que** l'au moins un robot de manipulation (32, 82, 116, 154, 178, 180) est pourvu d'un outil d'ouverture (50, 98, 134) au niveau de l'extrémité librement mobile de son bras.

7. Installation de robot selon la revendication 6, **caractérisée en ce qu'**un dispositif de mesure de force (48, 96, 132) est prévu entre l'extrémité librement mobile du bras du robot de manipulation et l'outil d'ouverture (50, 98, 134).
